# EUROPEAN PATENT SPECIFICATION

(11) **EP 3 157 357 B1**
(45) Date of publication and mention of the grant of the patent: **14.02.2018**
(21) Application number: 15726192.6
(22) Date of filing: 04.06.2015
(51) Int. Cl.: A23L 2/39, A23L 2/52, A23L 2/66, A23L 2/68, A23J 3/16

(54) **RECONSTITUTABLE SOY PROTEIN-CONTAINING BEVERAGE FORMULATION**
REKONSTITUIERBARE SOJAPROTEINHALTIGE GETRÄNKEFORMULIERUNG
FORMULATION DE BOISSON RECONSTITUABLE CONTENANT UNE PROTÉINE DE SOJA

(30) Priority: 17.06.2014 EP 14172786
(43) Date of publication of application: 26.04.2017
(73) Proprietor: The Coca-Cola Company, Atlanta, Georgia 30313 (US)
(72) Inventor: KHALLOUFI, Seddik, NL-3133 AT Vlaardingen (NL); VAN DER VELDEN, Sebastiaan, NL-3133 AT Vlaardingen (NL); VERMAAS, Arie, NL-3133 AT Vlaardingen (NL); ZUIDAM, Nicolaas, Jan, NL-3133 AT Vlaardingen (NL)
(74) Representative: Askew, Sarah Elizabeth
(86) International application number: PCT/EP2015/062489
(87) International publication number: WO 2015/193120

(56) References cited:
- WO-A1-2005/063056
- WO-A1-2011/088942
- US-A1- 2009 081 351
- DATABASE CAPLUS [Online] CHEMICAL ABSTRACTS SERVICE, COLUMBUS, OHIO, US; 1 October 2012 (2012-10-01), Nan: "Protein type solid drink capable of controlling caloric intake", XP002732170, retrieved from STN Database accession no. 2012:1419584 & CN 102 687 750 A (HANGZHOU NUOJIATE HEALTH TECHNOLOGY CO LTD) 26 September 2012 (2012-09-26)

## Description

### TECHNICAL FIELD OF THE INVENTION

The present invention relates to a reconstitutable soy protein-containing beverage formulation. More particularly, the invention provides a beverage formulation that can be reconstituted with water at ambient temperature without requiring the application of high shear. The beverage formulation can suitably be reconstituted to produce a beverage having an acidic pH that combines high stability with excellent mouthfeel properties. The reconstitutable beverage formulation of the present invention contains soy protein, acid, anionic polysaccharide, maltodextrin and mono/disaccharide.

The invention further relates to the preparation of such a beverage formulation by drying a pumpable aqueous composition containing soy protein, anionic polysaccharide, acid, maltodextrin and mono/disaccharide.

### BACKGROUND OF THE INVENTION

There is a growing demand for acidic soy protein-containing beverages. In addition, there is a need for beverage formulations that can easily be reconstituted with water to produce such an acidic soy protein-containing beverage.

A problem associated with soy protein-based reconstitutable beverage formulations arises from the relative insolubility of soy protein at pH 3.0 to 5.5. Spray dried beverage formulations containing soy protein and acidulant are difficult to produce as the soy protein tends to precipitate prior to spray drying. Likewise, reconstitution of powders containing soy protein and acidulant yields a resconsittuted liquid that suffers from sedimentation.

To overcome this problem stabilising agents have been used to keep the soy protein suspended in the acidic aqueous environment, thereby preventing coagulation and/or precipitation. Pectin, more particularly highly methylated pectin (HM pectin) has been applied to prevent precipitation of soy protein at low pH.

Soy protein-based beverage powders that contain acid, and that can be reconstituted with water to produce a stable acidic beverage have been described in several prior art publications. These publications describe beverage powders that besides soy protein and acid contain maltodextrin and HM pectin.

WO 2005/063056, for instance, describes a process for making a powdered precursor for preparing an acidic beverage, the process comprising the steps:
a) preparing a first slurry comprising a protein source and a stabiliser, said first slurry having a neutral or an acidic pH;
b) adjusting the pH of the first slurry, if necessary, to a value in the range of from 2 to 6, preferably from 3.5 to 4.2 ; and
c) spray drying the first slurry after step (a) or step (b).

The examples of this patent application describe the preparation of a spray dried powder containing soy protein isolate, maltodextrin, citric acid, HM pectin and water.

US 2009/081351 describes a reconstitutable powder containing:
- at least 0.04 mmole of calcium per gram of powder;
- at least 0.02 mmole of acid per gram of powder, said acid being selected from the group consisting of citric acid, tartaric acid, malic acid, phosphoric acid and combinations thereof;
- at least 20 mg of soy protein per gram of powder; and
- less than 10 wt. % of water

Example 7 describes a spray dried powder containing solids from soy bean extract, maltodextrin, citric acid, HM pectin, calcium carbonate, water and malic acid.

WO 2011/088942 describes a reconstitutable protein-containing particulate composition comprising
- at least 15 wt% soy protein; and
- water soluble soybean polysaccharide;
wherein the soy protein has a degree of solubility in water at a pH of 4.5 of less than 40 wt%, and wherein the weight ratio of soy protein to water soluble soybean polysaccharide is between 7:1 and 1:2.

Comparative Example B describes the preparation of a spray dried powder containing soy protein, pectin, maltodextrin, citric acid and other solids.

A disadvantage of the acidic soy protein-based beverage powders described above lies in the fact that in order to adequately solubilise the powder ingredients contained therein, the powder has to be mixed with hot water (40-70°C) and has to be subjected to high shear for about 20-30 min (e.g. using a colloid mill or a high pressure homogeniser). Consequently, these powders are not suitable for ordinary consumers who prefer to reconstitute beverage powders by mixing the powder with 'cold water' in a glass or a cup using a spoon.

Reconstitutable soy protein-containing beverage formulations that contain soy protein, maltodextrin and mono/disaccharides have also been described in the prior art.

WO 00/00043 describes a soy protein-based complete liquid nutritional product comprising:
a) a protein source supplying 1-25% of the total calories of the product, wherein said protein source comprises soy protein;
b) a lipid source supplying 5-15% of the total calories of the product;
c) a source of carbohydrate supplying 56-68% of the total calories of the product; and
d) a vitamin and mineral system.

Example III describes a spray dried powder containing corn syrup, sucrose, soy protein isolate and maltodextrin as the main ingredients.

CN 102885375 describes a solid beverage formulation containing vegetables/herbs, defatted soy flour, sucrose, maltodextrin, carrageenan and sodium carboxymethyl cellulose.

### SUMMARY OF THE INVENTION

The inventors have developed a soy protein-containing beverage formulation that can be reconstituted with water at ambient temperature to produce a stable beverage having an acidic pH and an excellent mouthfeel. The beverage formulation of the present invention can easily be dispersed into water and rapidly forms a very fine homogenous dispersion, even at ambient temperature. Consequently, simple stirring is sufficient to prepare a ready-to-drink beverage.

The reconstitutable acidic beverage formulation according to the present invention comprises at least 10 wt.% of soy protein-based particles, said soy protein-based particles containing:
- 15-70 wt.% of soy protein;
- 0.3-20 wt.% of anionic polysaccharide;
- 0.2-10 wt.% of acid;
- 15-50 wt.% of a combination of maltodextrin and saccharide, said saccharide being selected from monosaccharide, disaccharide and combinations thereof;
- less than 15 wt.% of water;
wherein the soy protein-based particles contain maltodextrin and saccharide in weight ratio of maltodextrin to saccharide of 1:8 to 4:1.

Although the inventors do not wish to be bound by theory, it is believed that the combined application of maltodextrin and saccharide in the specified concentrations and weight ratio enables the preparation of a non-sticky beverage powder that rapidly disperses in water of ambient temperature to form a stable acidic beverage. Because the components of the soy protein-based particles are very finely dispersed throughout the water the reconstituted beverage so obtained has excellent mouthfeel properties.

The invention further relates to a process of preparing an acidic beverage, the process comprising combining the aforementioned beverage formulation with an aqueous liquid to produce a beverage having a water content of at least 80 wt.%.

The invention also provides a method of preparing a soy protein-based powder composed of soy protein-based particles as defined herein before, the process comprising:
- providing an aqueous slurry comprising soy protein, anionic polysaccharide, acid, maltodextrin and saccharide;
- drying the slurry to a water content of less than 15 wt.%.

### DETAILED DESCRIPTION OF THE INVENTION

Accordingly, a first aspect of the invention relates to a reconstitutable acidic beverage formulation comprising at least 10 wt.% of soy protein-based particles, said soy protein-based particles containing:
- 15-70 wt.% soy protein;
- 0.3-20 wt.% of anionic polysaccharide;
- 0.2-10 wt.% of acid;
- 15-50 wt.% of a combination of maltodextrin and saccharide, said saccharide being selected from monosaccharide, disaccharide and combinations thereof;
- less than 15 wt.% of water;
wherein the soy protein-based particles contain maltodextrin and saccharide in weight ratio of maltodextrin to saccharide of 1:8 to 4:1.

The term "anionic polysaccharide" as used herein refers to a polysaccharide that in aqueous solution carries a negative charge at a pH of 7.0, and preferably also at a pH of 6.0.

All percentages herein are by weight (wt%), unless otherwise specified. The weight percent values are based on the weight of the ingredient of interest in percentage in relation to the total weight of all ingredients present in the product of interest, unless specified otherwise.

The beverage formulation of the present invention may be in the form of a powder. Alternatively, the formulation may be in the form of a solid product, a paste or a liquid, i.e. a product form in which the soy protein-based particles are dispersed throughout a solid or liquid matrix (e.g. oil). Most preferably, the beverage formulation of the present invention is a powder.

According to a particularly preferred embodiment, the beverage formulation is a powder having a mass weighted mean particle size of 1 to 500 µm, more preferably of 20-300 µm and most preferably of 30-250 µm.

Besides the soy protein-based particles the present beverage formulation can contain up to 90 wt.% of other ingredients. Preferably, these other ingredients are present in the formulation in particulate form. The other ingredients may be introduced into the beverage formulation by dry mixing with the soy protein-based particles. These other ingredients preferably represent 0-75 wt.%, more preferably 0-60 wt.% and most preferably 5-50 wt.% of the beverage formulation. Examples of other ingredients that may be included in the beverage formulation include: monosaccharides, disaccharides, oligosaccharides, polysaccharides, proteins (e.g gelatine), fruit solids, emulsifiers, acids, fats, vitamins, minerals, sweeteners, flavourings, sodium chloride, colourings, desiccants, and combinations thereof. Suitable polysaccharides include arabinoxylan, dextrin, starch, maltodextrin, xanthan gum, alginate, gellan gum, welan gum, diutan gum, rhamsan gum, carrageenan, guar gum, agar, gum arabic, gum ghatti, karaya gum, gum tragacanth, tamarind gum, locust bean gum, and combinations thereof. Suitable fruit solids include apple, apricot, banana, grapefruit, grape, guava, lemon, lime, mandarine, mango, orange, peach, pommel, pumpkin, squash, tangerine, tomato, and mixtures thereof. Suitable acids include hydrochloric acid, phosphoric acid, lactic acid, malic acid, citric acid, and ascorbic acid. Suitable minerals include calcium, magnesium, iron and zinc. Suitable sweeteners include sucralose, aspartame and stevia.

The soy protein-based particles typically represent at least 25 wt.%, more preferably at 40 wt.% and most preferably 50-100 wt.% of the beverage formulation.

The combination of soy protein, maltodextrin and saccharide typically represents at least 60 wt.%, more preferably at least 75 wt.% and most preferably at least 80 wt.% of the soy protein-based particles.

Soy protein and the anionic polysaccharide are preferably present in the soy protein-based particles in a weight ratio of soy protein to anionic polysaccharide of 7:1 to 1:2, more preferably of 5:1 to 2:1

The soy protein-based particles in the present beverage formulation preferably have a glass transition temperature measured by differential scanning calorimetry (DSC) of at least 10°C, more preferably of at least 15°C, most preferably of at least 20°C. The glass transition is the temperature at which the transition between rubbery and glassy phases takes place. Glass transition temperatures of less than 10°C can give rise to particle stickiness at ambient temperatures. More information about glass transition and stickiness of food powders can be found in B. Adhikari et al., Stickiness in foods: A review of mechanisms and test methods, 2001, International Journal of Food Properties 4(1), 1-33.

Upon reconstitution with water of neutral pH, the beverage formulation of the present invention yields an acidic beverage. Preferably, the beverage formulation yields a beverage having a pH in the range of 3.0 to 5.5, more preferably in the range of 3.4 to 5.0 and most preferably in the range of 3.8 to 4.5 when the formulation is dispersed in 100 ml distilled water (at 20°C) to provide 0.6 g soy protein per 100 ml of water.

The soy protein content of the soy protein-based particles typically does not exceed 50 wt.%, more preferably does not exceed 40wt.% and most preferably does not exceed 35 wt.%. The soy protein content of these particles usually is at least 5 wt.%, more preferably at least 10 wt.% and most preferably at least 15 wt.%.

The soy protein contained in the soy protein-based particles typically has a solubility in water at pH 4.5 of less than 40 wt%, more preferably of less than 30 wt% and most preferably less than 20 wt%. This solubility is determined by dispersing the soy protein-containing particles in distilled water (20°C) in an amount that provides 2.5% soy protein, followed by thorough stirring. After adjusting the pH of the resulting solution, if necessary, to pH 4.5, the solution is centrifuged at 10,000 G for 5 minutes, and the proportion of the supernatant soy protein to the total soy protein is determined.

According to a preferred embodiment, the anionic polysaccharide employed in accordance with the present invention is selected from carboxymethyl cellulose, pectin, soluble soybean polysaccharide, glycol alginate ester, and combinations thereof. One particularly preferred anionic polysaccharide is soluble soybean polysaccharide. Another especially preferred anionic polysaccharide is high methoxylated pectin having at least 50% of its carboxyl groups methoxylated.

The term "soluble soybean polysaccharide" as used herein refers to a heteropolysaccharide that originates from soybeans and that comprises less than 40 m ol.% galacturonic acid and at least 40 mol.% neutral sugar (side chains). Preferably the galacturonic acid content of the soluble soybean polysaccharide is less than 30 mol%, more preferably less than 25 mol%. The neutral sugar content of the soluble soybean polysaccharide preferably is more than 50 mol%, more preferably more than 60 mol%.

Soluble soybean polysaccharide is a more branched polymer than HM pectin. The backbone of soluble soybean polysaccharide is believed to consist of homogalacturonan regions interlinked by short regions of rhamnogalacturonan to which side chains of neutral sugars are attached. Also the backbone of HM pectin consist of homogalacturonan, interspersed with some rhamnogalacturonan regions (although few) and the side chains of commercial pectin are typically few and short. The main component in both soluble soybean polysaccharide and commercial HM pectin are galactose, arabinose, rhamnose, fucose, xylose, glucose and galacturonic acid. However, whereas commercial pectin consist mainly of galacturonic acid (typically > mol 60%) and few neutral sugars (about 9 mol %), preferred soluble soybean polysaccharide consists mainly of arabinose, galactose and galacturonic acid. Preferably, the amount of galactose in the soluble soybean polysaccharide is higher than 20 mol%, more preferably higher than 30 mol%, most preferably higher than 35 mol%. The amount of arabinose in the soluble soybean polysaccharide is preferably higher than 15 mol%, more preferably higher than 20 mol%, most preferably higher than 23 mol%. The soluble soybean polysaccharide typically has a molecular weight of at least 150kDa, more preferably of at least 200 kDa.

The neutral sugar composition and the level of the different components can suitably be analysed using gas chromatography (GC) after hydrolysis and derivatisation [Hans N. Englyst and Hohn H. Cummings, Simplified method for the measurement of total non-starch polysaccharides by gas-liquid chromatography of constituent sugars as alditol acetates, Analyst, 1984, 109, 930-942; Hauke Hilz, et al, Cell wall polysaccharides in black currants and bilberries - characterisation in berries, juice, and press cake, Carbohydrate Polymers, 2005, 59(4), 477-488]. The uronic acid content is analysed with a m-hydroxydiphenyl colour assay [Thibault, J.F. Automatisation du dosage des substance pectiques par la methode au meta-hydroxydiphenyl (An automatised method for the determination of pectic substances), Lebensmittel-Wissenschaft und Technologie, 1979, 12, 247-251].

The anionic polysaccharide is preferably present in the soy protein-based particles in a concentration of 0.3-20 wt.%, more preferably of 1-15 wt.% and most preferably of 3-10 wt.%.

The acid that is contained in the soy protein-based particles is preferably selected from citric acid, malic acid, lactic acid, tartaric acid, ascorbic acid, hydrochloric acid, phosphoric acid, and combinations thereof. More preferably, the acid is an organic acid, even more preferably an organic acid selected from citric acid, lactic acid and combinations thereof. Most preferably, the organic acid is citric acid.

The soy protein-based particles typically contain 0.2-10 wt.%, more preferably 0.5-5 wt.% and most preferably 0.8-2 wt.% of the acid.

The combined amount of maltodextrin and saccharide that is contained in the soy protein-based particles typically lies in the range of 15-50 wt.%, more preferably of 20-45 wt.% and most preferably of 25-40 wt.%.

The maltodextrin employed in the soy protein-based particles preferably has a dextrose equivalent (DE) of 10-40, more preferably of 15-30 and most preferably of 18-25.

The saccharide in the soy protein-based particles is preferably selected from sucrose, lactose, glucose, fructose and combinations thereof. More preferably, the saccharide is selected from sucrose, glucose, fructose and combinations thereof. Most preferably, the saccharide is sucrose.

Maltodextrin and saccharide are advantageously present in the soy protein-based particles in a weight ratio that lies in the range of 1:4 to 3:1, more preferably 1:3 to 2:5 and most preferably of 1:2 to 2:1.

The water content of the soy protein-based particles typically does not exceed 15 wt.% , more preferably it does not exceed 10 wt.% and most preferably it does not exceed 5 wt.%.

Another aspect of the present invention relates to a process of preparing an acidic beverage, the process comprising combining a beverage formulation as defined herein before with an aqueous liquid to produce a beverage having a water content of at least 80 wt.%.

In accordance with a particularly preferred embodiment, the preparation of the acidic beverage comprises combining the beverage formulation with an aqueous liquid having a temperature of less than 35°C, more preferably of less than 30°C and most preferably of less than 28°C.

The beverage formulation of the present invention may be reconstituted with different aqueous liquids. Preferably, the aqueous liquid employed is selected from water, juice and combinations thereof. Examples of juices that may be employed include fruit juice, herb juice, leave juice, vegetable juice and combinations thereof. Upon dissolution of the beverage powder into a juice, a soy-juice beverage is obtained. The juice of choice can, for example, be made of apple, apricot, banana, grapefruit, grape, guava, lemon, lime, mandarine, mango, orange, peach, pommel, pumpkin, squash, tangerine, tomato, carrot, tea, mint, and mixtures thereof.

The reconstituted beverage obtained by the present process typically contains soy protein in a concentration of 0.1 to 5 wt.%, more preferably in a concentration of 0.2 to 1 wt.% and most preferably of 0.4 to 0.7 wt.%.

The pH of the reconstituted beverage preferably lies in the range of 3.0 to 5.5, more preferably in the range of 3.5 to 5.0 and most preferably of 3.8 to 4.5

Naturally, other ingredients may be added to the reconstituted beverage. Furthermore, the reconstituted beverage may be pasteurised or sterilised, and subsequently packaged for distribution.

A further aspect of the invention relates to a reconstituted acidic beverage that is obtained by the aforementioned process.

Yet another aspect of the invention relates to a method of preparing a soy protein-based powder that is composed of the soy protein-based particles as defined herein before, the process comprising:
- providing a pumpable aqueous composition comprising soy protein, anionic polysaccharide, acid, maltodextrin and saccharide;
- drying the composition to a water content of less than 15 wt.%.

The pumpable aqueous composition typically has a water content of 58 to 96 wt.%, more preferably of 65-90 wt.% and most preferably of 70-80 wt.%.

The pumpable aqueous composition employed in the present method preferably contains, calculated by weight of dry matter:
- 15-80 wt.% soy protein;
- 0.5-24 wt.% anionic polysaccharide;
- 0.2-12 wt.% of acid; and
- 15-57 wt.% of a combination of maltodextrin and saccharide.

The pumpable aqueous composition preferably has a pH in the range of 3.0 to 5.5, most preferably of 3.5 to 4.5.

The pumpable aqueous composition may suitably be dried using different drying techniques known in the art, such as spray drying, freeze drying or drum drying, optionally followed by grinding or milling. Most preferably, the pumpable aqueous composition is dried by means of spray-drying.

In accordance with yet another preferred embodiment, the dried composition is granulated or agglomerated to produce the soy protein-based powder. The granulated or agglomerated soy protein-based powder so obtained preferably has a mass weighted mean particle size of 1 to 500 µm, most preferably of 30 to 250 µm.

The soy protein-based powder obtained by the present method may suitably be compined with other dry beverage ingredients to produce a reconstitutable beverage formulation as described herein before.

The invention is further illustrated by the following examples.

### EXAMPLES

### Example 1

A reconstitutable soy protein-containing beverage formulation was prepared starting from three stock formulations whose compositions are shown in the following tables.

| **Soybase stock formulation** | **Grams** | **Wt.%** |
|---|---|---|
| Soybase ¹ | 214.2 | 89.7 |
| Sucrose | 11.3 | 4.7 |
| Maltodextrin (DE 19-20) | 13.3 | 5.6 |

| | | |
|---|---|---|
| ¹ Dehulled soy extract (UHT) ex Sunopta (11.5% solids, 5.6% protein) | | |

| **Pectin stock formulation** | **Grams** | **Wt.%** |
|---|---|---|
| HM pectin ² | 143.2 | 2.7 |
| Sucrose | 4 | 1.3 |
| Water | 2 | 96.0 |

| | | |
|---|---|---|
| ² AMD783 ex Danisco | | |

| **Citric acid stock formulation** | **Grams** | **Wt.%** |
|---|---|---|
| Citric acid (anhydrous) | 1.9 | 16.0 |
| Water | 10 | 84.0 |

The pectin stock formulation was prepared by adding the pectin and sucrose to demineralised water having a temperature of 60°C, followed by mixing with a Silverson mixer (15 minutes).

A pumpable aqueous compositions was prepared as follows:
- The pectin stock formulation was mixed using a Silverson high shear mixer
- 2.5 ml of the citric acid stock formulation was added
- The soybase stock formulation was added
- The combined stock formulations were mixed for 1 minute using Silverson mixer
- The rest of the citric acid stock formulation was added
- The combination of stock formulations was mixed for another minute using Silverson mixer
- The mixture was de-aerated by vacuum
- The mixture was homogenised using high pressure homogenisation (180 bar)

The pumpable liquid so obtained had the composition shown in Table 1.

**Table 1**

| | **Grams** | **Wt.%** | **%by weight of dry matter** |
|---|---|---|---|
| Soy protein | 12.0 | 3.0 | 20.8 |
| Other soybean solids | 13.2 | 3.3 | 22.9 |
| HM pectin | 4 | 1.0 | 6.9 |
| Citric acid | 1.9 | 0.5 | 3.3 |
| Maltodextrin | 13.3 | 3.3 | 23.1 |
| Sucrose | 13.3 | 3.3 | 23.1 |
| Water | 342.3 | 85.6 | |

The homogenised pumpable mixture was spray dried (Niro Mobile Minor) using a 2-fluid top nozzle having a diameter of 0.5 mm. Inlet and outlet temperature employed were approximate 170°C and 70°C, respectively. Throughput of the feed was about 1.7 kg/h.

The spray dried powder so obtained had an volume-weighted average diameter (D(4,3)) of approximately 8 µm. The DSC thermogram showed that the powder particles had a glass transition temperature of 18°C with an onset temperature of 11 °C.

The spray dried powder had a water content of 4 wt.% and was free flowing.

### Examples 2 and 3

Example 1 was repeated using different quantities of the stock formulations to produce reconstitutable beverage formulations having the compositions shown in Table 2. The dehulled soy extract (UHT) ex Sunopta used had a slightly different ratio of protein to solid content as in Example 1 (11.3% solids, 5.6% protein)

**Table 2**

| | **Wt.%** | |
|---|---|---|
| | **2** | **3** |
| Soy protein | 20.0 | 20.0 |
| Other soybean solids | 20.4 | 20.4 |
| HM pectin | 6.4 | 6.4 |
| Citric acid | 3.0 | 3.0 |
| Maltodextrin | 30.8 | 15.4 |
| Sucrose | 15.4 | 30.8 |
| Water | 4.0 | 4.0 |

The spray dried powders so obtained were free flowing, and had a volume-weighted average diameter (D(4,3)) of approximately 8 µm. The DSC thermogram showed that the powder particles of Example 2 had a glass transition temperature of 23°C with an onset temperature of 15°C, and those of Example 3 had a glass transition of 11 °C with an onset temperature of 5°C

### Comparative Examples A and B

Example 1 was repeated using different quantities of the stock formulations with the aim to produce reconstitutable beverage formulations having the dry matter compositions shown in Table 3. The dehulled soy extract (UHT) ex Sunopta used had a slightly different ratio of protein to solid content as in Example 1 (11.3% solids, 5.6% protein)

**Table 3**

| | **Wt.%** | |
|---|---|---|
| | **A** | **B** |
| Soy protein | 20.0 | 20.0 |
| Other soybean solids | 20.4 | 20.4 |
| HM pectin | 6.4 | 6.4 |
| Citric acid | 3.0 | 3.0 |
| Maltodextrin | 0.0 | 46.2 |
| Sucrose | 46.2 | 0.0 |

The homogenised pumple liquid of Example A could not be spray-dried properly, as the powder obtained was very sticky.

The spray dried powder of Example B was free flowing, had a water content of 4 wt.% and a volume-weighted average diameter (D(4,3)) of approximately 8 µm. The DSC thermogram showed that the powder particles of Example B had a glass transition temperature of 39°C with an onset temperature of 24°C.

### Example 4

The spray dried powders of Examples 1, 2, 3 and B were dry-mixed with other ingredients to prepare a powder beverage having the composition shown in Table 4.

**Table 4**

| **Ingredient** | **Weight (g)** |
|---|---|
| Spray dried powder (example 1, 2, 3 or B) | 6.29 |
| Sucrose | 4.19 |
| Sucralose | 0.03 |
| Ascorbic aicd | 0.105 |
| Sodium citrate (2H2O) | 0.072 |
| Vitamin-mineral mix | 0.042 |
| Beta-carotene 1% | 0.052 |
| Turmuric | 0.031 |
| Orange flavour | 0.26 |

The powder beverages so obtained were added to 200 ml tap water (20 °C) in a beaker and stirred with a spoon to dissolve the powder.

The powder beverages containing the spray dried powders of Example 1, 2 or 3 dissolved within 2 minutes. However, the powder beverage containing the spray dried powder of Example B did not dissolve properly and formed considerable sediment at the bottom of the beaker.

## Claims

1. A reconstitutable acidic beverage formulation comprising at least 10 wt.% of soy protein-based particles, said soy protein-based particles containing:
• 15-70 wt.% soy protein;
• 0.3-20 wt.% of anionic polysaccharide;
• 0.2-10 wt.% of acid;
• 15-50 wt.% of a combination of maltodextrin and saccharide, said saccharide being selected from monosaccharide, disaccharide and combinations thereof;
• less than 15 wt.% of water;
wherein the soy protein-based particles contain maltodextrin and saccharide in weight ratio of maltodextrin to saccharide of 1:8 to 4:1.

2. Formulation as claimed in claim 1, wherein the combination of soy protein, maltodextrin and saccharide represents at least 60 wt.%, preferably at least 75 wt.% of the soy protein-based particles.

3. Formulation as claimed in claim 1 or 2, wherein the anionic polysaccharide selected from carboxymethyl cellulose, pectin, soluble soybean polysaccharide, glycol alginate ester and combinations thereof.

4. Formulation as claimed in any one of the preceding claims, wherein the saccharide is selected from sucrose, glucose, fructose and combinations thereof.

5. Formulation as claimed in any one of the preceding claims, wherein the acid is selected from citric acid, malic acid, lactic acid, tartaric acid, ascorbic acid, hydrochloric acid and phosphoric acid, and combinations thereof.

6. Formulation as claimed in any one of the preceding claims, wherein the soy protein-based particles contain maltodextrin and saccharide in weight ratio of maltodextrin to saccharide of 1:4 to 3:1.

7. Formulation as claimed in any one of the preceding claims, wherein the formulation contains at least 40 wt.% of the soy-protein based particles and 0-60 wt.% of other particulate ingredients selected from monosaccharides, disaccharides, oligosaccharides, polysaccharides, proteins, fruit solids, emulsifiers, acids, fats, vitamins, minerals, sweeteners, flavourings, sodium chloride, colourings, desiccants, and combinations thereof.

8. Formulation as claimed in any one of the preceding claims wherein the formulation has a mass weighted mean particle size of 1 to 500 µm, preferably of 20-300 µm.

9. A process of preparing an acidic beverage, the process comprising combining a beverage formulation as claimed in any one of claim 1 to 8 with an aqueous liquid to produce a beverage having a water content of at least 80 wt.%.

10. Process according to claim 9, wherein the aqueous liquid is selected from water, juice and combinations thereof.

11. An acidic beverage obtained by a process as claimed in claim 9 or 10.

12. A method of preparing a soy protein-based powder composed of soy protein-based particles as defined in any one of claims 1 to 8, the process comprising:
• providing a pumpable aqueous composition comprising soy protein, anionic polysaccharide, acid, maltodextrin and saccharide;
• drying the pumpable aqueous composition to a water content of less than 15 wt.%.

13. Method as claimed in claim 12, wherein the pumpable aqueous composition contains, calculated by weight of dry matter:
• 15-80 wt.% soy protein;
• 0.5-24 wt.% anionic polysaccharide;
• 0.2-12 wt.% of acid; and
• 15-57 wt.% of a combination of maltodextrin and saccharide.

14. Method as claimed in claim 12 or 13, wherein the pumpable aqueous composition contains 58-96 wt.% water.

15. Method as claimed in any one of claims 12-14, wherein the pumpable aqueous composition is dried by means of spray drying.

## Patentansprüche

1. Rekonstituierbare saure Getränkeformulierung, umfassend wenigstens 10 Gew.-% Partikel auf Sojaproteinbasis, wobei die Partikel auf Sojaproteinbasis enthalten:
• 15-70 Gew.-% Sojaprotein;
• 0,3-20 Gew.-% anionisches Polysaccharid;
• 0,2-10 Gew.-% Säure;
• 15-50 Gew.-% an einer Kombination von Maltodextrin und Saccharid, wobei das Saccharid ausgewählt ist aus Monosaccharid, Disaccharid und Kombinationen davon;
• weniger als 15 Gew.-% Wasser;
wobei die Partikel auf Sojaproteinbasis Maltodextrin und Saccharid in einem Gewichtsverhältnis von Maltodextrin zu Saccharid von 1:8 bis 4:1 enthalten.

2. Formulierung gemäß Anspruch 1, wobei die Kombination von Sojaprotein, Maltodextrin und Saccharid wenigstens 60 Gew.-%, vorzugsweise wenigstens 75 Gew.-%, der Partikel auf Sojaproteinbasis darstellt.

3. Formulierung gemäß Anspruch 1 oder 2, wobei das anionische Polysaccharid ausgewählt ist aus Carboxymethylcellulose, Pectin, löslichem Sojabohnen-Polysaccharid, Glycolalginatester und Kombinationen davon.

4. Formulierungen gemäß einem der vorstehenden Ansprüche, wobei das Saccharid ausgewählt ist aus Saccharose, Glucose, Fructose und Kombinationen davon.

5. Formulierungen gemäß einem der vorstehenden Ansprüche, wobei die Säure ausgewählt ist aus Citronensäure, Apfelsäure, Milchsäure, Weinsäure, Ascorbinsäure, Salzsäure und Phosphorsäure und Kombinationen davon.

6. Formulierungen gemäß einem der vorstehenden Ansprüche, wobei die Partikel auf Sojaproteinbasis Maltodextrin und Saccharid in einem Gewichtsverhältnis von Maltodextrin zu Saccharid von 1:4 bis 3:1 enthalten.

7. Formulierungen gemäß einem der vorstehenden Ansprüche, wobei die Formulierung wenigstens 40 Gew.-% an den Partikeln auf Sojaproteinbasis und 0-60 Gew.-% an anderen partikelförmigen Inhaltsstoffen ausgewählt aus Monosacchariden, Disacchariden, Oligosacchariden, Polysacchariden, Proteinen, festen Fruchtbestandteilen, Emulgatoren, Säuren, Fetten, Vitaminen, Mineralstoffen, Süßstoffen, Aromastoffen, Natriumchlorid, Farbstoffen, Trockenmitteln und Kombinationen davon enthält.

8. Formulierungen gemäß einem der vorstehenden Ansprüche, wobei die Formulierung eine massegewichtete mittlere Partikelgröße von 1 bis 500 µm aufweist, vorzugsweise 20-300 µm.

9. Verfahren zum Herstellen eines sauren Getränks, wobei das Verfahren Kombinieren einer Getränkeformulierung gemäß einem der Ansprüche 1 bis 8 mit einer wässrigen Flüssigkeit umfasst, um ein Getränk mit einem Wassergehalt von wenigstens 80 Gew.-% zu ergeben.

10. Verfahren gemäß Anspruch 9, wobei die wässrige Flüssigkeit ausgewählt ist aus Wasser, Saft und Kombinationen davon.

11. Saures Getränk, erhalten durch ein Verfahren gemäß Anspruch 9 oder 10.

12. Verfahren zum Herstellen eines Pulvers auf Sojaproteinbasis, das aus Partikeln auf Sojaproteinbasis gemäß einem der Ansprüche 1 bis 8 besteht, wobei das Verfahren umfasst:
• Bereitstellen einer pumpbaren wässrigen Zusammensetzung, die Sojaprotein, anionisches Polysaccharid, Säure, Maltodextrin und Saccharid umfasst;
• Trocknen der pumpbaren wässrigen Zusammensetzung auf einen Wassergehalt von weniger als 15 Gew.-%.

13. Verfahren gemäß Anspruch 12, wobei die pumpbare wässrige Zusammensetzung, berechnet für das Gewicht der Trockensubstanz, enthält:
• 15-80 Gew.-% Sojaprotein;
• 0,5-24 Gew.-% anionisches Polysaccharid;
• 0,2-12 Gew.-% Säure; und
• 15-57 Gew.-% an einer Kombination von Maltodextrin und Saccharid.

14. Verfahren gemäß Anspruch 12 oder 13, wobei die pumpbare wässrige Zusammensetzung 58-96 Gew.-% Wasser enthält.

15. Verfahren gemäß einem der Ansprüche 12-14, wobei die pumpbare wässrige Zusammensetzung durch Sprühtrocknen getrocknet wird.

## Revendications

1. Formulation de boisson acide pouvant être reconstituée, comprenant au moins 10% en poids de particules à base de protéines de soja, lesdites particules à base de protéines de soja contenant :
- 15-70% en poids de protéines de soja ;
- 0,3-20% en poids d'un polysaccharide anionique ;
- 0,2-10% en poids d'un acide ;
- 15-50% en poids d'une combinaison de maltodextrines et d'un saccharide, ledit saccharide étant choisi parmi un monosaccharide, un disaccharide et des combinaisons de ceux-ci ;
- moins de 15% en poids d'eau ;
dans laquelle les particules à base de protéines de soja contiennent des maltodextrines et un saccharide selon un rapport pondéral des maltodextrines au saccharide allant de 1:8 à 4:1.

2. Formulation selon la revendication 1, dans laquelle la combinaison de protéines de soja, de maltodextrines et de saccharide, représente au moins 60% en poids, préférablement au moins 75% en poids, des particules à base de protéines de soja.

3. Formulation selon la revendication 1 ou 2, dans laquelle le polysaccharide anionique est choisi parmi la carboxyméthylcellulose, une pectine, un polysaccharide de soja soluble, un ester d'alginate de glycol, et des combinaisons de ceux-ci.

4. Formulation selon l'une quelconque des revendications précédentes, dans laquelle le saccharide est choisi parmi le saccharose, le glucose, le fructose, et des combinaisons de ceux-ci.

5. Formulation selon l'une quelconque des revendications précédentes, dans laquelle l'acide est choisi parmi l'acide citrique, l'acide malique, l'acide lactique, l'acide tartrique, l'acide ascorbique, l'acide chlorhydrique et l'acide phosphorique, et des combinaisons de ceux-ci.

6. Formulation selon l'une quelconque des revendications précédentes, dans laquelle les particules à base de protéines de soja contiennent des maltodextrines et un saccharide selon un rapport pondéral des maltodextrines au saccharide allant de 1:4 à 3:1.

7. Formulation selon l'une quelconque des revendications précédentes, où la formulation contient au moins 40% en poids des particules à base de protéines de soja et 0-60% en poids d'autres ingrédients particulaires choisis les monosaccharides, les disaccharides, les oligosaccharides, les polysaccharides, les protéines, les matières solides de fruits, les émulsifiants, les acides, les matières grasses, les vitamines, les minéraux, les édulcorants, les aromatisants, le chlorure de sodium, les colorants, les dessiccants, et des combinaisons de ceux-ci.

8. Formulation selon l'une quelconque des revendications précédentes, où la formulation possède une taille de particules moyenne pondérée en masse allant de 1 à 500 µm, préférablement de 20-300 µm.

9. Procédé de préparation d'une boisson acide, le procédé comprenant la combinaison d'une formulation de boisson selon l'une quelconque des revendications 1 à 8 avec un liquide aqueux, afin de produire une boisson ayant une teneur en eau d'au moins 80% en poids.

10. Procédé selon la revendication 9, dans lequel le liquide aqueux est choisi parmi l'eau, un jus, et des combinaisons de ceux-ci.

11. Boisson acide, obtenue par un procédé selon la revendication 9 ou 10.

12. Méthode de préparation d'une poudre à base de protéines de soja, composée de particules à base de protéines de soja telles que définies selon l'une quelconque des revendications 1 à 8, le procédé comprenant :
- la fourniture d'une composition aqueuse pompable comprenant des protéines de soja, un polysaccharide anionique, un acide, des maltodextrines et un saccharide ;
- le séchage de la composition aqueuse pompable jusqu'à une teneur en eau inférieure à 15% en poids.

13. Méthode selon la revendication 12, dans laquelle la composition aqueuse pompable contient, calculé en poids de matière sèche :
- 15-80% en poids de protéines de soja ;
- 0,5-24% en poids d'un polysaccharide anionique ;
- 0,2-12% en poids d'un acide ; et
- 15-57% en poids d'une combinaison de maltodextrines et d'un saccharide.

14. Méthode selon la revendication 12 ou 13, dans laquelle la composition aqueuse pompable contient 58-96% en poids d'eau.

15. Méthode selon l'une quelconque des revendications 12-14, dans laquelle la composition aqueuse pompable est séchée au moyen d'un séchage par pulvérisation.
